**Europäisches Patentamt**

(19) **European Patent Office**

**Office européen des brevets**

(11) Numéro de publication : **0 116 387**
**B1**

(12) **FASCICULE DE BREVET EUROPÉEN**

(45) Date de publication du fascicule du brevet :
**11.11.87**

(51) Int. Cl.⁴ : **H 04 B   3/23**

(21) Numéro de dépôt : **84200086.1**

(22) Date de dépôt : **23.01.84**

(54) **Procédé d'initialisation des coefficients de filtres dans un dispositif d'annulation d'échos proche et lointain et dispositif de mise en oeuvre de ce procédé.**

(30) Priorité : **31.01.83 FR 8301457**

(43) Date de publication de la demande :
**22.08.84 Bulletin 84/34**

(45) Mention de la délivrance du brevet :
**11.11.87 Bulletin 87/46**

(84) Etats contractants désignés :
**BE CH DE FR GB IT LI NL SE**

(56) Documents cités :
**DE-A- 1 906 770**
**DE-C- 2 262 700**
**FR-A- 1 585 273**
**US-A- 3 721 777**
**IRE TRANSACTIONS ON INFORMATION THEORY, vol. IT7, avril 1961, pages 82-87, New York, US. M. J. E. GOLWAY: "Complementary series"**
**IEEE TRANSACTIONS ON COMMUNICATIONS, vol. COM-25, no. 7, juillet 1977, pages 654-666, New York, US. S. B. WEINSTEIN: "A passband data-driven echo canceller for full-duplex transmission on two-wire circuits"**

(73) Titulaire : **TELECOMMUNICATIONS RADIOELECTRI-QUES ET TELEPHONIQUES T.R.T.**
**88, rue Brillat Savarin**
**F-75013 Paris (FR)**

(72) Inventeur : **Barazeche, Bahman**
**SOCIETE CIVILE S.P.I.D. 209 rue de l'Université**
**F-75007 Paris (FR)**
Inventeur : **Alexis, Roger Pierre Joseph**
**SOCIETE CIVILE S.P.I.D. 209 rue de l'Université**
**F-75007 Paris (FR)**
Inventeur : **Guidoux, Loic Bernard Yves**
**SOCIETE CIVILE S.P.I.D. 209 rue de l'Université**
**F-75007 Paris (FR)**

(74) Mandataire : **Chaffraix, Jean et al**
**Société Civile S.P.I.D. 209, rue de l'Université**
**F-75007 Paris (FR)**

**EP 0 116 387 B1**

## 0 116 387

**Description**

L'invention concerne un procédé utilisé dans un dispositif d'annulation d'écho incorporé dans un équipement émetteur-récepteur pour annuler dans la voie réception d'un signal d'écho engendré par un signal appliqué à la voie émission et formé d'un écho proche pratiquement non retardé et d'un écho lointain retardé, ce dispositif d'annulation d'écho fonctionnant à une certaine fréquence d'échantillonnage et comprenant un annuleur d'écho proche recevant un signal D affecté des variations de phase de la porteuse de transmission et un annuleur d'écho lointain recevant ledit signal D affecté de plus d'un retard substantiellement égal au retard mesuré $\tau$ de l'écho lointain, ce procédé étant destiné à l'initialisation des coefficients de filtre des annuleurs d'écho proche et lointain.

On sait que les annuleurs d'écho sont des dispositifs adaptatifs qui sont formés à l'aide de filtres à coefficients réglables et qui sont incorporés dans les modems de transmission de données connectés à une voie de transmission bidirectionnelle, pour annuler automatiquement les échos intempestifs se produisant dans la voie réception, en réponse au signal appliqué à la voie émission. Les annuleurs d'écho conventionnels, sont généralement conçus pour annuler les signaux d'écho non retardés ou relativement peu retardés, se produisant sur les liaisons terrestres nationales et internationales.

Or les liaisons internationales s'effectuent de plus en plus par l'intermédiaire de satellites de communications. Dans une telle liaison comportant un trajet par satellite entre deux stations hertziennes, il peut se produire dans la voie réception d'un modem un écho dit proche, peu ou pas retardé, engendré dans la partie de la liaison avant le trajet par satellite et un écho dit lointain qui est engendré dans la partie de la liaison après le trajet par satellite et qui est donc affecté d'un retard $\tau$ important, dépendant notamment du temps de propagation des ondes dans le trajet par satellite. Comme le satellite utilisé peut être géostationnaire ou non et comme le trajet terrestre peut être différent selon les liaisons, on peut estimer que dans le réseau commuté international, le retard $\tau$ de l'écho lointain peut prendre des valeurs allant environ de 220 ms à 630 ms.

Pour annuler le signal d'écho composé d'un écho proche et d'un écho lointain qui ont chacun une durée relativement faible de l'ordre d'une dizaine ou de quelques dizaines de ms, mais qui sont séparés par un intervalle de temps élevé de l'ordre de grandeur du retard $\tau$, il est avantageux d'utiliser le dispositif d'annulation d'écho ayant la structure décrite ci-dessus et connue de l'article de Stephen B. Weinstein, intitulé « A Passband Data Driven Echo Canceller for Full-Duplex Transmission on Two-Wire Circuits » et paru dans la revue IEEE Transactions, vol. COM-25, n° 7, juillet 1977, pages 654-666. Cette structure comporte un filtre transversal adaptatif qui reçoit directement un signal de la voie émission et qui fournit une copie de l'écho proche lorsque ses coefficients sont convenablement réglés et un autre filtre transversal adaptatif qui reçoit le signal de la voie émission affecté d'un retard égal au retard mesuré de l'écho lointain et qui fournit une copie de l'écho lointain lorsque ses coefficients sont convenablement réglés. En soustrayant du signal reçu, la somme des signaux sortant des deux filtres, on annule les échos proche et lointain dans la voie réception. Cette structure qui nécessite une mesure préalabe, au moins grossière, du retard $\tau$ de l'écho lointain a l'avantage d'utiliser des filtres adaptatifs de complexité raisonnable.

Pour le réglage des coefficients des deux filtres adaptatifs, après la mesure du retard $\tau$ de l'écho lointain, l'article de Weinstein précité propose d'utiliser l'algorithme du gradient, même pendant une période d'apprentissage préalable à la transmission des données utiles en duplex simultané. Avec cet algorithme, les coefficients sont réglés par récurrences successives et tendent asymptotiquement vers leurs valeurs optimales, ce qui conduit à une convergence assez lente des deux annuleurs d'écho.

La présente invention a pour but de fournir un procédé d'acquisition rapide des coefficients des filtres de l'annuleur d'écho proche et de l'annuleur d'écho lointain, après une mesure préalable du temps de retard $\tau$ de l'écho lointain qui peut être effectuée par n'importe quel procédé, par exemple celui décrit dans l'article de Weinstein précité ou celui décrit dans la demande de brevet français n° 82 22 124 déposée le 30 décembre 1982 au nom de la demanderesse.

L'invention est basée sur l'idée d'engendrer des échos à l'aide de séquences complémentaires dites de « Golay » et suivies chacune d'un intervalle de temps $\Delta$ réglé en fonction du retard mesuré $\tau$. Ces séquences complémentaires décrites dans un article de Golay (« Complementary series », IRE Transactions, Vol. IT-17, pages 82-87, avril 1961), ont des fonctions d'autocorrélation apériodiques telles que par addition, les lobes latéraux de ces fonctions s'annulent. L'intervalle de temps $\Delta$ est réglé à l'aide du retard $\tau$ de telle façon que les échos proche et lointain se produisent dans des intervalles de temps déterminés, toujours séparés et contigus, afin de permettre par des calculs de corrélation entre les séquences émises et le signal reçu, la détermination des coefficients de filtre des deux annuleurs d'écho.

Le procédé conforme à l'invention comporte au moins les opérations suivantes :

a) l'application à la voie émission d'un signal d'apprentissage formé d'au moins deux séquences d'apprentissage successives comprenant chacune une paire de séquences complémentaires S et C de même durée d, ayant des fonctions d'autocorrélation apériodiques dont les lobes principaux ont le même signe et les lobes latéraux ont sensiblement la même valeur absolue et des signes contraires, chaque séquence S et C étant suivie d'un intervalle de temps de durée variable $\Delta$, déterminée en fonction du retard mesuré $\tau$ de façon que l'écho lointain engendré par une séquence S ou C de chaque séquence

2

d'apprentissage apparaisse dans un intervalle de temps déterminé d'une séquence d'apprentissage suivante, immédiatement après l'intervalle de temps d'apparition de l'écho proche engendré par la séquence S ou C de ladite séquence d'apprentissage suivante ;

b) pendant la durée de chaque séquence d'apprentissage émise à la suite de la première séquence, le calcul des signaux de corrélation entre un signal déduit du signal reçu et échantillonné à ladite fréquence d'échantillonnage et des signaux de référence constitués respectivement, pendant la durée d'une séquence S et la durée $\Delta$ suivante par la valeur conjuguée dudit signal D appliqué aux annuleurs d'écho pendant une séquence S et, pendant la durée d'une séquence C et la durée $\Delta$ suivante, par la valeur conjuguée dudit signal D appliqué aux annuleurs d'écho pendant une séquence C ;

l'application d'un retard d + $\Delta$ au signal de corrélation formé pendant la durée d'une séquence S et la durée $\Delta$ suivante,

l'élaboration d'un signal de somme dudit signal de corrélation retardé et du signal de corrélation formé pendant la durée d'une séquence C et la durée $\Delta$ suivante ;

c) l'aiguillage dudit signal de somme vers l'annuleur d'écho proche, puis vers l'annuleur d'écho lointain, durant deux intervalles de temps consécutifs suivant une séquence C et pendant lesquels ce signal de somme constitue sous forme série les coefficients de l'annuleur d'écho proche et les coefficients de l'annuleur d'écho lointain.

L'invention concerne également un dispositif mettant en œuvre le procédé conforme à l'invention selon la revendication 6.

Dans les systèmes de commutation par satellites, lorsqu'une liaison est établie, il n'est généralement pas toléré des périodes de silence de durée $\Delta$ pouvant atteindre des centaines de ms. On doit donc émettre pendant ces intervalles de temps $\Delta$ des signaux de remplissage, en évitant que ces signaux de remplissage ne procurent des signaux parasites pendant les intervalles de temps où sont formés les coefficients des annuleurs d'écho. Pour éviter ces signaux parasites, selon une variante du procédé de l'invention, les intervalles de temps $\Delta$ des séquences d'apprentissage émises comportent des signaux de remplissage tels que dans deux séquences d'apprentissage consécutives on utilise les signaux de remplissage A et $\bar{A}$ pour les intervalles de temps $\Delta$ suivant les deux séquences S et les signaux de remplissage B et $\bar{B}$ pour les intervalles de temps $\Delta$ suivant les deux séquences C, ces signaux de remplissage étant tels que A + $\bar{A}$ = 0 et B + $\bar{B}$ = 0, en ce qu'il est émis un nombre de séquences d'apprentissage suffisant pour qu'il soit calculé, pendant la durée d'un nombre pair de séquences d'apprentissage émises, les signaux de somme des signaux de corrélation, et en ce que ces signaux de somme considérés pendant le double de la durée d'une séquence d'apprentissage sont accumulés pour former le signal de somme qui est aiguillé vers l'annuleur d'écho proche, puis vers l'annuleur d'écho distant et constitue les coefficients de ces annuleurs d'écho.

La description suivante, en regard des dessins annexés, le tout donné à titre d'exemple, fera bien comprendre comment l'invention peut être réalisée.

La figure 1 représente le schéma d'un modem muni d'annuleurs d'écho proche et lointain et du dispositif d'initialisation des coefficients, mettant en œuvre le procédé de l'invention.

La figure 2 représente des diagrammes de temps illustrant le procédé de l'invention.

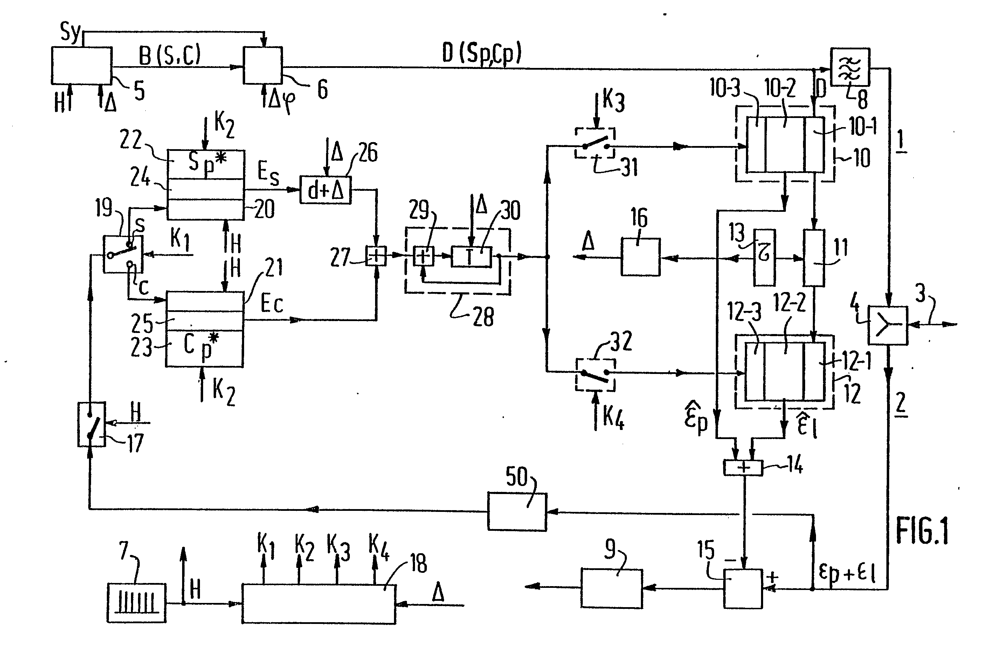

Le modem muni d'un dispositif d'annulation d'écho et représenté sur la figure 1 comporte une voie émission 1 et une voie réception 2 couplées à une voie de transmission bidirectionnelle 3 par l'intermédiaire d'un circuit de couplage 4.

La voie émission 1 est connectée à une source de données 5 qui fournit un signal en bande de base B dans lequel les données peuvent changer de valeur à la fréquence d'horloge H, fournie par le générateur d'horloge 7. On suppose que dans le modem on utilise la modulation de phase, combinée éventuellement avec une modulation d'amplitude. Dans le cas d'une modulation à deux états de phase 0-180°, le signal en bande de base B est un signal réel. Dans le cas d'une modulation à 4 ou 8 états de phase, le signal B est un signal complexe, qui subit à chaque période 1/H des sauts de phase correspondant aux données à émettre. Le signal B est appliqué au circuit 6, dans lequel sa phase est augmentée, à chaque période 1/H de la variation de phase $\Delta\varphi$ (pendant cette période 1/H) de la porteuse utilisée pour la transmission. Dans les cas pratiques de modulation, le signal D fourni par le circuit 6 est complexe, même dans le cas où le signal en bande de base B est réel, puisque ce dernier a été affecté des variations de phase de la porteuse. Le signal complexe D est appliqué à un filtre passe-bande 8 pour signaux complexes, dont la bande passante est centrée sur la fréquence de la porteuse utilisée pour la transmission. Le filtre 8 fournit ainsi le signal analogique de porteuse modulée qui est dirigé vers l'accès émission du circuit de couplage 4. La vitesse de modulation de la porteuse est déterminée par la fréquence d'horloge H. Dans le cas par exemple d'un modem normalisé utilisant la modulation de phase à 8 états, la vitesse de modulation est de 1 600 bauds et la fréquence de la porteuse est de 1 800 Hz ; avec ces valeurs, le signal complexe D peut prendre une phase parmi 8 phases multipes de $\Pi/4$ allant de 0 à $7\Pi/4$.

Sur l'accès réception du circuit de couplage 4 ne devrait apparaître que le signal de porteuse modulé par des données dans un modem distant, transmis par la voie de transmission 3 et destiné à être traité dans le récepteur 9 chargé de restituer les données transmises. En fait, lorsqu'un signal utile est émis en direction du modem distant par la voie émission 1, des signaux d'écho intempestifs engendrés notamment dans les circuits de couplage deux fils-quatre fils de la voie de transmission, peuvent apparaître sur l'accès réception du circuit de couplage 4 et gravement perturber la restitution des données par le récepteur 9. Comme on l'a expliqué, lorsque la voie de transmission comporte un trajet par satellite, le signal d'écho intempestif peut comporter simultanément un écho proche non retardé, engendré entre le modem local et le trajet par satellite et un écho lointain engendré entre le trajet par satellite et le modem distant. Ces types d'écho ont sensiblement la même durée, au maximum quelques dizaines de ms ; mais l'écho lointain a, par rapport à l'écho proche, un retard $\tau$ pouvant varier par exemple entre 220 et 630 ms.

Pour réaliser de façon économique l'annulation d'un signal d'écho formé d'un écho proche et d'un écho lointain, on peut utiliser un dispositif d'annulation traitant le signal de données D et ayant la structure connue représentée sur la figure 1. Ainsi qu'on l'a expliqué, ce signal D, affecté des variations de phase de la porteuse, est complexe et le dispositif d'annulation d'écho est agencé pour traiter des signaux complexes. On va supposer, pour simplifier, que le signal reçu dans le modem est échantillonné à la fréquence H de modulation, ce qui implique que le signal de données D traité par le dispositif d'annulation d'écho est échantillonné aussi à la fréquence H. Il est en effet bien connu que, si pour annuler le signal d'écho, on doit échantillonner le signal reçu avec une fréquence d'échantillonnage H' multiple de H (H' = qH) de façon à répondre au théorème de Shannon, il suffit d'utiliser n sous-annuleurs d'écho identiques, travaillant chacun séparément à la fréquence d'échantillonnage H, avec un décalage temporel de 1/qH.

Le dispositif d'annulation d'écho de la figure 1 comporte un annuleur de l'écho proche 10 comportant notamment une mémoire 10-1 ayant la fonction d'une ligne à retard, une mémoire 11 ayant la fonction d'une ligne à retard et un annuleur de l'écho lointain 12 comportant notamment une mémoire 12-1 ayant la fonction d'une ligne à retard. Les trois lignes à retard 10-1, 11 et 12-1 sont montées en cascade et reçoivent le signal D.

L'annuleur d'écho proche 10 comporte un circuit de calcul 10-2 qui forme la somme pondérée des échantillons du signal D stockés dans la ligne à retard 10-1, avec des coefficients de pondération complexes présents dans la mémoire 10-3. La ligne à retard 10-1 produit un retard $\tau_1$ sensiblement égal à la durée maximale de l'écho proche. La ligne à retard 11 produit un retard $\tau$-$\tau_1$ de façon que les échantillons du signal D parviennent à l'entrée de la ligne à retard 12-1 avec un retard sensiblement égal au retard $\tau$ de l'écho lointain. Ce retard $\tau$ est mesuré par n'importe quel procédé connu tel que par exemple celui décrit dans l'article de Weinstein précité ou celui décrit dans la demande de brevet français 82 22 124 et l'information du retard $\tau$ résultant de la mesure est supposée stockée dans la mémoire 13. L'annuleur d'écho lointain 12 comporte un circuit de calcul 12-1 qui forme la somme pondérée des échantillons du signal D retardés, stockés dans la ligne à retard 12-1, avec des coefficients de pondération complexes présents dans la mémoire 12-3. La ligne à retard 12-1 produit un retard $\tau_2$ qui est sensiblement égal à la durée maximale de l'écho lointain et qui est du même ordre de grandeur que $\tau_1$.

L'annuleur d'écho proche 10 et l'annuleur d'écho distant 12 forment des filtres transversaux à coefficients complexes dont les signaux de sortie $\hat{\varepsilon}_p$ et $\hat{\varepsilon}_\ell$ calculés dans les circuits de calcul 10-2 et 12-2, sont appliqués au circuit additionneur 14. Le signal $\hat{\varepsilon}_p + \hat{\varepsilon}_\ell$ sortant du circuit additionneur 14 est appliqué à l'entrée (—) du circuit de différence 15. Par son entrée (+) et sa sortie, ce circuit de différence 15 est inséré dans la voie de réception 2 entre le circuit de couplage 4 et le récepteur 9. Les coefficients de pondération de l'annuleur d'écho proche 10 et de l'annuleur d'écho lointain 12, stockés dans les mémoires 10-3 et 12-3, sont à régler pour que les signaux $\hat{\varepsilon}_p$ et $\hat{\varepsilon}_\ell$ fournis par les filtres transversaux de ces annuleurs d'écho soient pratiquement égaux aux signaux d'écho proche $\varepsilon_p$ et lointain $\varepsilon_\ell$, qui apparaissent dans la voie réception 2. On obtient alors que, dans le signal de sortie du circuit de différence 15, le signal $\varepsilon_p + \varepsilon_\ell$ résultant des échos proche et lointain est pratiquement annulé.

Le réglage des coefficients de filtre des annuleurs d'écho proche et lointain, est généralement effectué par récurrences successives, suivant l'algorithme du gradient, de façon à minimiser la valeur quadratique moyenne du signal de sortie du circuit de différence 15. Mais avec cette méthode préconisée dans l'article de Weinstein précité, le temps d'initialisation des coefficients lors du démarrage du dispositif est forcément long, puisque les coefficients tendent asymptotiquement vers leurs valeurs optimales. La présente invention fournit un procédé permettant le calcul rapide des coefficients des annuleurs d'écho proche et lointain et utilisable lors du démarrage du dispositif d'annulation d'écho.

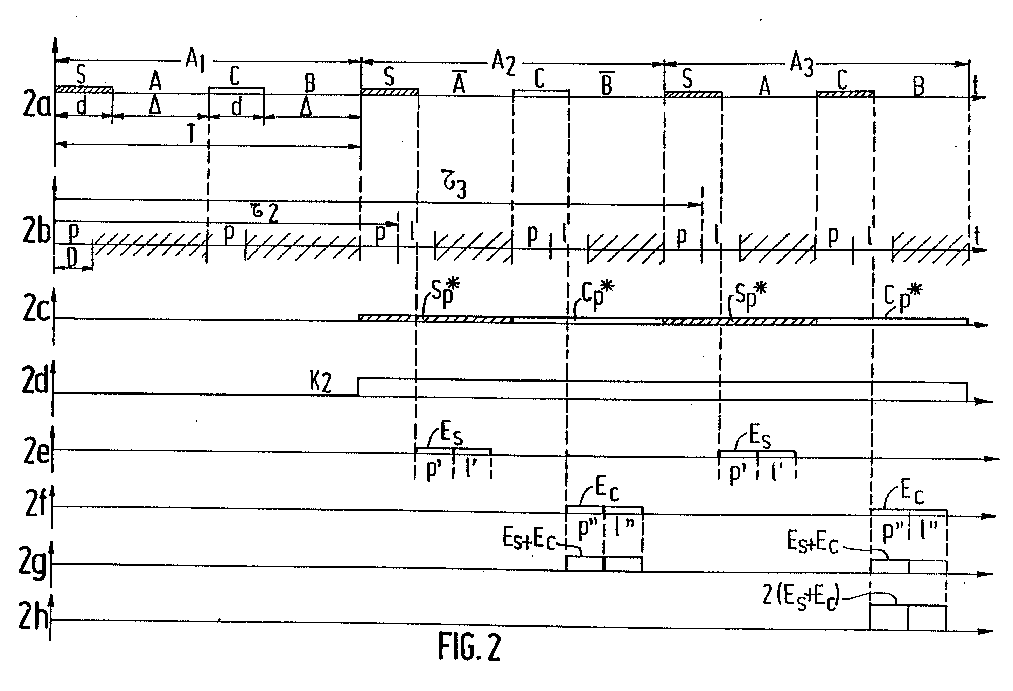

Suivant le procédé de l'invention, pour engendrer des échos proche et lointain servant au calcul de ces coefficients, on émet par la voie émission 1, à l'aide d'un générateur de données 5 approprié, un signal en bande de base B formé d'au moins deux séquences d'apprentissage consécutives qui ont la structure et les propriétés que l'on va décrire à l'aide du diagramme de temps 2a de la figure 2. Sur ce diagramme, on a représenté par exemple trois séquences d'apprentissage $A_1$, $A_2$, $A_3$ de même durée T, émises consécutivement à partir d'un instant origine t = 0. Chaque séquence $A_1$, $A_2$ ou $A_3$ comporte une paire de séquences complémentaires S et C, de même durée d et formées chacune d'un certain nombre de bits se produisant à la fréquence de modulation H. Par exemple chaque séquence est formée de 64 bits se produisant à la fréquence de 1 600 Hz : ce qui correspond à une durée d de 40 ms. Ces séquences complémentaires S et C ont des fonctions d'autocorrélation apériodiques avec des lobes principaux de même signe et des lobes latéraux sensiblement de même valeur absolue et des signes contraires ; la propriété intéressante de cette paire de séquences complémentaires S et C est que, si l'on additionne leurs fonctions d'autocorrélation apériodiques, les deux lobes principaux s'ajoutent tandis que les lobes latéraux se détruisent pratiquement.

0 116 387

On a supposé ci-dessus pour fixer les idées que les séquences complémentaires S et C formaient un signal binaire, donc réel. Mais on peut utiliser aussi des séquences complémentaires S et C formant un signal complexe et ayant les mêmes propriétés en ce qui concerne leurs fonctions d'autocorrélation apériodiques.

Chaque séquence S ou C est suivie d'un intervalle de temps de durée $\Delta$ variable qui est déterminée en fonction du retard mesure $\tau$ de l'écho lointain comme on va l'expliquer à l'aide du diagramme 2b associé au diagramme 2a. Sur le diagramme 2b, on a représenté des intervalles de temps p, suivant le début de chacune des séquences S et C dans les séquences d'apprentissage $A_1$, $A_2$, $A_3$. Ces intervalles de temps p ont une durée D pendant laquelle s'étend au maximum la réponse impulsionnelle du trajet de l'écho proche engendré par une impulsion de Dirac se produisant au début d'une séquence S ou C. Les intervalles de temps $\Delta$ sont déterminés pour que la réponse impulsionnelle du trajet de l'écho lointain engendré par une telle impulsion de Dirac au début de la première séquence $A_1$ par exemple, se produise au cours des séquences suivantes $A_2$ ou $A_3$, dans des intervalles de temps $\ell$ de durée D suivant immédiatement les intervalles de temps p. Ainsi, les échos lointains engendrés par des impulsions de Dirac se produisant au début des séquences S et C de la première séquence $A_1$, pourront se produire dans les intervalles $\ell$ de la deuxième séquence $A_2$, avec un retard $\tau = \tau_2$ par rapport à l'instant de ces impulsions de Dirac. Les échos lointains engendrés par les impulsions de Dirac. Les échos lointains engendrés par les impulsions de Dirac de la première séquence $A_1$, pourraient également se produire au cours des intervalles de temps $\tau$ de la troisième séquence $A_3$, avec un retard $\tau = \tau_3$, ou au cours d'autres séquences suivantes non représentées.

La détermination pratique de la durée $\Delta$ selon le retard $\tau$ mesuré de l'écho lointain est effectuée dans le dispositif 16, qui reçoit l'information de retard $\tau$ contenue dans la mémoire 13 et qui fournit au générateur de données 5 une information caractérisant la durée $\Delta$. Le générateur 5 est agencé pour modifier en fonction de cette information, les durées $\Delta$ dans les séquences d'apprentissage.

Le fonctionnement du dispositif 16 répond aux considérations qui suivent : l'intervalle de temps $\Delta$ comporte une partie fixe de durée 2D égale à la somme des durées des intervalles p et $\ell$ et une partie variable de durée $\varepsilon$ de sorte que l'on a :

$$\Delta = 2D + \varepsilon$$

On déduit aisément des indications portées sur les diagrammes 2a et 2b que l'on a :

$$T = 2(d + 2D + \varepsilon)$$
$$\tau = kT + D \qquad \text{(k entier)}$$

Selon que l'écho lointain procuré par une impulsion de Dirac au début de la première séquence $A_1$, se trouve dans la deuxième séquence $A_2$ ou dans la troisième séquence $A_3$ ou dans une quatrième séquence $A_4$ non représentée, on a k = 1 ou k = 2, ou k = 3.

D'autre part, la partie variable $\varepsilon$ de l'intervalle de temps $\Delta$ doit être déterminée avec un pas égal à l'intervalle de modulation, soit 1/H, H étant la fréquence de modulation. On peut donc écrire :

$$\varepsilon = m \cdot 1/H$$

En utilisant les relations ci-dessus donnant T, $\tau$ et $\varepsilon$ on obtient aisément :

$$\tau = 2\,k(d + 2D) + 2\,km/H + D$$

En prenant par exemple,
pour la durée d'une séquence S ou C : d = 40 ms,
pour la durée d'un intervalle p ou $\ell$ : D = 30 ms,
pour la fréquence de modulation : H = 1 600 Hz,
on obtient pour le retard $\tau$ exprimé en ms :

$$\tau = 200\ k + 1{,}25\ km + 30 \tag{1}$$

Pour chaque retard $\tau$ mesuré, les paramètres k et m doivent être choisis de façon que l'équation (1) soit vérifiée. Le Tableau I ci-dessous donne les valeurs de k à choisir, pour plusieurs domaines des valeurs possibles du retard $\tau$ mesuré. Pour chaque domaine de $\tau$, on donne aussi le domaine correspondant des valeurs de m.

Tableau I

| | | |
|---|---|---|
| $230 \leqslant \tau < 430$ | k = 1 | $0 \leqslant m < 160$ |
| $430 \leqslant \tau < 630$ | k = 2 | $0 \leqslant m < 80$ |
| $630 \leqslant \tau \leqslant 780$ | k = 3 | $0 \leqslant m \leqslant 40$ |

5

**0 116 387**

Pour chaque valeur du retard mesuré $\tau$, on peut obtenir une valeur de m satisfaisant à l'équation (1) ce qui permet de former la partie variable $\varepsilon$ des intervalles de temps $\Delta$ ($\varepsilon = m \cdot 1/H$) et finalement l'intervalle de temps $\Delta$.

Il est facile pour l'homme de l'art de concevoir un dispositif 16 qui, par des procédés logiques et des procédés de calcul connus permettent de faire correspondre à chaque retard $\tau$ mesuré, un couple de valeurs de k et m, caractérisant la durée des intervalles de temps $\Delta$. C'est ce couple de valeurs caractérisant cette durée $\Delta$ qui peut être transmis au générateur de données 5 pour l'émission de séquences d'apprentissage convenables.

Après l'émission de la première séquence d'apprentissage $A_1$, ayant la caractéristique de durée $\Delta$ convenable, il est effectué suivant le procédé de l'invention un traitement du signal reçu apparaissant à l'extrémité réception du circuit de couplage 4. Ce traitement commence au début de la séquence d'apprentissage dans laquelle apparaît l'écho lointain engendré par la première séquence d'apprentissage $A_1$. Cette séquence de début du traitement est $A_2$ ou $A_3$ suivant que $\tau = \tau_2$ ou $\tau_3$ (c'est-à-dire $k = 1$ ou 2). On suppose par la suite que le traitement commence au début de la deuxième séquence d'apprentissage $A_2$.

Selon le procédé de l'invention, ce traitement consiste tout d'abord à former le signal de corrélation entre la version complexe du signal reçu et un signal de référence qui est constitué soit par la valeur conjuguée $S_p^*$ d'une séquence $S_p$, soit par la valeur conjuguée $C_p^*$ d'une séquence $C_p$, les séquences $S_p$ et $C_p$ étant respectivement les séquences complémentaires S et C, affectées des variation de phase $\Delta\varphi$ de la porteuse, c'est-à-dire les séquences fournies par le circuit 6, en réponse aux séquences S et C. Comme le montre le diagramme 2c associé au diagramme 2a, le signal de référence est $S_p^*$ pendant la durée d'émission d'une séquence S et la durée $\Delta$ suivant immédiatement cette séquence S émise ; le signal de référence est $C_p^*$ pendant la durée d'émission d'une séquence C et pendant la durée $\Delta$ suivant immédiatement cette séquence C émission. On peut remarquer que sur le diagramme 2c, on n'a représenté le signal de référence ainsi constitué que pendant la durée du traitement qui commence dans l'exemple choisi au début de la deuxième séquence $A_2$.

Les séquences $S_p$ et $C_p$ fournies par le circuit 6 peuvent s'écrire :

$$S_p = S \exp j \, 2\Pi \, f_c t$$
$$C_p = C \exp j \, 2\Pi \, f_c t$$

$f_c$ étant la fréquence de la porteuse de transmission et $2\Pi f_c t$ représentant la phase de cette porteuse, variable avec le temps.

On peut montrer que, si la phase de cette porteuse est la même au début de chaque séquence d'apprentissage, les séquences $S_p$ et $C_p$, ainsi que les séquences de références $S_p^*$, $C_p^*$ sont complémentaires comme les séquences d'origine S et C, c'est-à-dire que si l'on additionne leurs fonctions d'autocorrélation apériodiques, les deux lobes principaux s'ajoutent, tandis que les lobes latéraux se détruisent pratiquement. Cette condition de phase de la porteuse est assurée sur la figure 1 par un signal de synchronisation $S_y$, élaboré dans le générateur 5, pour remettre à une valeur fixe $\Phi_o$, au début de chaque séquence d'apprentissage, la phase des séquences $S_p$ et $C_p$ fournies par le circuit 6.

Le traitement précité peut être effectué par exemple comme l'indique la figure 1. Le signal reçu est prélevé dans la voie réception 2 et appliqué à un circuit 50 qui comprend un circuit déphaseur de 90° pour former la composante imaginaire du signal reçu, le circuit 50 fournissant un signal complexe formé du signal reçu et de cette composante imaginaire. Le signal complexe reçu ainsi formé est appliqué au circuit d'échantillonnage 17, pour être échantillonné à la fréquence d'échantillonnage H. Le signal reçu ainsi échantillonné est appliqué au circuit d'aiguillage 19 qui est actionné par un signal de commande $K_1$ pour être établi sur la position s, pendant les intervalles de temps $d + \Delta$ où le signal de référence est une séquence $S_p^*$ et sur la position c pendant les intervalles de temps $d + \Delta$ où le signal de référence est une séquence $C_p^*$. Le signal de commande $K_I$ est élaboré par le circuit de commande 18 d'une part à partir de la fréquence de modulation H et d'autre part à partir de l'information caractérisant la durée variable $\Delta$.

Selon que le circuit d'aiguillage 19 est sur la position s ou sur la position c, le signal complexe reçu échantillonné est appliqué aux registres à décalage 20 ou 21 qui reçoivent des impulsions de décalage de fréquence H. Ces registres ont un nombre n d'éléments correspondant à la durée d d'une séquence S ou C émise, soit $n = 64$ éléments pour $d = 40$ mS et $H = 1\,600$ Hz. D'autre part dans les mémoires 22 et 23 sont stockés respectivement les n éléments des séquences de référence $S_p^*$ et $C_p^*$. Un signal de commande $K_2$ montré sur le diagramme 2d permet de faire apparaître en parallèle sur les sorties des mémoires 22 et 23 les n éléments des séquences $S_p^*$ et $C_p^*$ pendant un certain nombre de séquences d'apprentissage suivant la première séquence $A_1$. Avec le signal $K_2$ du diagramme 2d, ces bits apparaissent pendant les deux séquences d'apprentissage $A_2$ et $A_3$. Le signal de commande $K_2$ est élaboré dans le circuit de commande 18.

Les éléments de la séquence $S_p^*$ apparaissant aux sorties de la mémoire 22 et les échantillons complexes du signal reçu apparaissant en parallèle aux sorties du registre 20 sont appliqués au circuit de calcul 24 qui calcule la somme des produits de ces éléments et de ces échantillons pour former ainsi le signal de corrélation $E_S$. Un signal de corrélation $E_c$ est calculé de la même manière par le circuit de

6

calcul 25 à partir des éléments de la séquence $C_p^*$ apparaissant aux sorties de la mémoire 23 et des échantillons complexes du signal reçu apparaissant aux sorties du registre 21.

Il est aisé de comprendre que l'on pourrait aussi calculer les signaux de corrélation $E_s$ et $E_c$ au moyen d'un seul dispositif de calcul tel que 24 associé à un registre à décalage 20 connecté en permanence à la sortie du circuit d'échantillonnage 17 et à une mémoire 22 fournissant alternativement une séquence $S_p^*$ et une séquence $C_p^*$. Le dispositif de calcul fournirait alors alternativement le signal $E_s$ et le signal $E_c$ qui devraient être répartis sur deux voies, comme sur la figure 1.

En se plaçant dans le cas où aucun signal n'est émis pendant les intervalles de temps $\Delta$ des séquences d'apprentissage, les diagrammes 2e et 2f représentent les intervalles de temps pendant lesquels apparaît la contribution des échos proche et lointain dans les signaux de corrélation $E_s$ et $E_c$. D'après le diagramme 2e, la contribution de l'écho proche dans le signal $E_s$ apparaît pendant un intervalle de temps $p'$ de durée D, suivant chaque séquence S émise à partir de la deuxième séquence d'apprentissage A2 ; la contribution de l'écho lointain dans le signal $E_s$ apparaît pendant un intervalle de temps $\ell'$ de durée D, suivant chaque intervalle de temps $p'$. D'après le diagramme 2f, la contribution de l'écho proche dans le signal $E_c$ apparaît pendant un intervalle de temps $p''$ de durée D, suivant chaque séquence C émise à partir de la deuxième séquence d'apprentissage $A_2$ ; la contribution de l'écho lointain dans le signal $E_c$ apparaît pendant un intervalle de temps $\ell''$ de durée D, suivant chaque intervalle de temps $p''$.

Le signal de corrélation $E_s$ est retardé d'une durée $d + \Delta$, moitié de la durée T d'une séquence d'apprentissage, à l'aide du circuit de retard 26 qui reçoit du circuit 16 l'information sur la durée variable $\Delta$ et qui produit le retard $d + \Delta$ variant en fonction de $\Delta$. Le signal de corrélation $E_s$ retardé et le signal de corrélation $E_c$ sont additionnés à l'aide du circuit additionneur 27. Il en résulte le signal de somme $E_s + E_c$ représenté sur le diagramme 2g et qui se produit pendant les mêmes intervalles de temps $p''$ et $\ell''$ que le signal $E_c$ du diagramme 2f. Grâce à la propriété de complémentarité des séquences de références $S_p^*$ et $C_p^*$ dont les fonctions d'autocorrélation apériodiques additionnées forment une fonction dont seul le lobe principal n'est pas nul, le signal de somme $E_s + E_c$ représente, pendant les intervalles de temps $p''$, la réponse impulsionnelle du trajet de l'écho proche et, pendant les intervalles de temps $\ell''$, la réponse impulsionnelle du trajet de l'écho lointain excluant le trajet produisant le retard $\tau$. Comme en fait le signal de somme $E_s + E_c$ est échantillonné à la cadence d'échantillonnage H, on obtient pendant les intervalles de temps $p''$ des échantillons de la réponse impulsionnelle du trajet de l'écho proche, c'est-à-dire, en série, les coefficients de l'annuleur d'écho proche et pendant les intervalles de temps $\ell''$ des échantillons de la réponse impulsionnelle de l'écho lointain, c'est-à-dire, en série, les coefficients de l'annuleur d'écho lointain.

Dans le cas envisagé jusqu'à présent où aucun signal n'est émis pendant les intervalles de temps $\Delta$, on pourrait n'émettre que les deux séquences d'apprentissage $A_1$ et $A_2$ et extraire les coefficients des deux annuleurs d'écho, du signal $E_s + E_c$ formé pendant la séquence $A_2$ à l'aide de fenêtres de temps convenables. Mais il peut être utile pour améliorer le rapport signal/bruit, d'accumuler pendant plusieurs périodes T du signal d'apprentissage le signal $E_s + E_c$, avant d'en extraire les coefficients des annuleurs d'écho. Sur le diagramme 2h, on montre par exemple le signal $2 (E_s + E_c)$ résultant de l'accumulation du signal $E_s + E_c$ formé pendant les deux séquences d'apprentissage $A_2$ et $A_3$. Dans ce cas, pendant une fenêtre de temps coïncidant avec l'intervalle de temps $p''$ de la séquence $A_3$ on peut obtenir en série les coefficients de l'annuleur d'écho proche et pendant une fenêtre de temps coïncidant avec l'intervalle de temps $\ell''$ de la séquence $A_3$, on peut obtenir en série les coefficients de l'annuleur d'écho lointain.

L'opération d'accumulation du signal de somme $E_s + E_c$ est réalisée sur la figure 1 à l'aide de l'accumulateur 28 relié à la sortie de l'additionneur 27 et réalisé à l'aide de l'additionneur 29 et du circuit de retard 30 montés comme l'indique la figure. Le circuit 30 produit un retard égal à la période T du signal d'apprentissage et est commandé par la durée variable $\Delta$ puisque T est fonction de $\Delta$. L'accumulation se produit pendant un nombre de périodes T défini par le signal $K_2$, par exemple deux périodes dans le cas illustré par les diagrammes de la figure 2.

La sortie de l'accumulateur 28 est reliée d'une part à la mémoire des coefficients 10-3 de l'annuleur d'écho proche à travers la porte 31 représentée sous forme d'un contact interrupteur et d'autre part à la mémoire des coefficients 12-3 de l'annuleur d'écho lointain, à travers la porte 32. Les portes 31 et 32 permettent de réaliser les fenêtres de temps pendant lesquelles sont extraits les coefficients des annuleurs d'écho proche et lointain. Ces portes 31 et 32 sont commandées respectivement par les signaux de commande $K_3$ et $K_4$ engendrés par le circuit de commande 18, et rendant ces portes passantes respectivement pendant les intervalles de temps $p''$ et $\ell''$ de la séquence $A_3$.

On s'est placé jusqu'à présent dans le cas où aucun signal n'est émis pendant les intervalles de temps $\Delta$ des séquences d'apprentissage. Or les liaisons par satellites sont effectuées par répartition dans le temps et souvent il ne peut être toléré de telles périodes de silence, dont la durée $\Delta$ dépend de chaque liaison. Il est donc nécessaire d'émettre pendant les intervalles de temps $\Delta$ des signaux de remplissage. Mais les signaux de corrélation $E_s + E_c$ comportent alors des termes dépendant de ces signaux de remplissage et il en résulte des signaux parasites dans les fenêtres de temps pendant lesquelles sont extraits les coefficients des annuleurs d'échos proche et lointain.

On peut éviter ces signaux parasites en utilisant des signaux de remplissage tels que, dans deux séquences d'apprentissage consécutives, les signaux de remplissage pour les deux intervalles de temps $\Delta$ qui se correspondent aient une somme nulle. Par exemple, comme le montre le diagramme 2a, les premier et deuxième intervalles de temps $\Delta$ de la première séquence $A_1$ peuvent être remplis respectivement par des signaux A et B quelconques. Mais les premier et deuxième intervalles de temps de la deuxième séquence $A_2$ doivent être alors remplis par des signaux $\bar{A}$ et $\bar{B}$ tels que $A + \bar{A} = 0$ et $B + \bar{B} = 0$. Pour la troisième séquence $A_3$ on utilisera les signaux de remplissage A et B et ainsi de suite. Les signaux A et B peuvent être identiques et constitués par exemple très simplement par une suite alternée de $+ 1$ et $- 1$.

Avec ces signaux de remplissage, A, $\bar{A}$, B et $\bar{B}$, on obtient des termes de corrélation parasites qui se superposent aux termes de corrélation utiles et qui sont :

— pendant la durée de la deuxième séquence $A_2$, le résultat des corrélations de A avec $S_p{}^*$ et de B avec $C_p{}^*$ ;

— pendant la durée de la troisième séquence $A_3$, le résultat des corrélations de $\bar{A}$ avec $S_p{}^*$ et de $\bar{B}$ avec $C_p{}^*$.

Si l'on accumule le résultat des corrélations effectuées pendant la durée de ces deux séquences $A_2$ et $A_3$, les termes de corrélations parasites s'annulent et dans les fenêtres de temps définies par les intervalles de temps $p''$ et $\ell''$ de la séquence $A_3$, on obtient les coefficients des annuleurs d'échos proche et lointain, exempts des signaux parasites procurés par les signaux de remplissage.

Dans le cas d'utilisation des signaux de remplissage définis ci-dessus, la période du signal d'apprentissage est 2T, soit deux fois la durée d'une séquence comportant les signaux de remplissage A, B ou $\bar{A}$, $\bar{B}$. Pour améliorer le rapport signal/bruit, on peut donc accumuler le résultat des corrélations pendant une durée multiple de 2T, c'est-à-dire multiple pair de la durée T d'une séquence.

Le procédé de l'invention et le dispositif correspondant de la figure 1, ont été décrits dans le cas où le dispositif d'annulation d'écho traite le signal D avec une fréquence d'échantillonnage égale à la fréquence de modulation H. Comme on l'a indiqué plus haut, on peut être amené à faire travailler le dispositif d'annulation d'écho avec un signal D échantillonné à une fréquence d'échantillonnage H' = qH, multiple de H. Dans ce cas le dispositif d'annulation d'écho est composé de q branches travaillant chacune à la fréquence d'échantillonnage H sur les échantillons du signal D répartis dans le temps et composées chacune comme le dispositif de la figure 1, c'est-à-dire d'un sous-annuleur d'écho proche analogue à 10, d'une ligne à retard analogue à 11 et d'un sous-annuleur d'écho lointain analogue à 12. Pour initialiser les coefficients des q sous-annuleurs d'écho proche et des q sous-annuleurs d'écho lointain, on doit, suivant le procédé de l'invention, échantillonner le signal reçu avec une fréquence d'échantillonnage H' = qH, puis répartir dans le temps les échantillons du signal reçu sur n dispositifs d'initialisation analogues chacun au dispositif d'initialisation formé par les éléments 19 à 32. Chacun de ces dispositifs d'initialisation travaille à la fréquence d'échantillonnage H pour fournir les coefficients des deux sous-annuleurs d'échos proche et lointain d'une branche.

Le procédé de l'invention tel qu'il a été décrit jusqu'à présent permet d'obtenir en une seule étape les coefficients complexes des annuleurs d'écho proche et lointain, grâce à l'utilisation de la version complexe du signal reçu pour former les signaux de corrélation $E_s$ et $E_c$. Mais selon une variante du procédé de l'invention, on peut obtenir ces coefficients complexes sans former la version complexe du signal reçu, ce qui permet d'éviter l'emploi d'un circuit 50 avec un circuit déphaseur de 90°.

Selon cette variante, l'initialisation des coefficients s'opère en deux étapes. Dans une première étape, on engendre à l'aide du génératuer 5 la succession choisie de séquences d'apprentissage formant un signal en bande de base B. Dans le circuit 6, ce signal B est affecté des variations de phase $\Delta\varphi$ de la porteuse de transmission en phase pour former le signal D. En utilisant directement le signal reçu (c'est-à-dire en supprimant le circuit 50), on obtient, exactement comme on l'a expliqué, des coefficients complexes $K_{1p}$ formés pour l'annuler d'écho proche et des coefficients complexes $K_{1\ell}$ formés pour l'annuleur d'écho lointain. Dans une deuxième étape, on engendre à l'aide du générateur 5 le même signal en bande de base B. Mais, dans le circuit 6, ce signal B est affecté des variations de phase $\Delta\varphi$ de la porteuse de transmission en quadrature pour former ainsi le signal jD. En utilisant directement le signal reçu et en utilisant pour former les signaux de corrélation $E_s$ et $E_c$ les mêmes signaux de référence $S_p{}^*$ et $C_p{}^*$ que dans la première étape, on obtient des coefficients complexes $K_{2p}$ formés pour l'annuleur d'écho proche et des coefficients complexes $K_{2\ell}$ formés pour l'annuleur d'écho lointain. Les coefficients $K_p$ et $K_\ell$ à utiliser pour les annuleurs d'échos proche et lointain sont obtenus en formant la somme des coefficients formés à l'issue des deux étapes, soit :

$$\begin{cases} K_p = K_{1p} + K_{2p} \\ K_\ell = K_{1\ell} + K_{2\ell} \end{cases}$$

En contrepartie de la suppression d'un circuit déphaseur de 90° pour former le circuit 50, cette variante procure un temps d'initialisation des coefficients double.

**Revendications**

1. Procédé utilisé dans un dispositif d'annulation d'écho incorporé dans un équipement émetteur-récepteur pour annuler dans la voie réception (2) un signal d'écho engendré par un signal appliqué à la voie émission (1) et formé d'un écho proche pratiquement non retardé et d'un écho lointain retardé, ce dispositif d'annulation d'écho fonctionnant à une certaine fréquence d'échantillonnage et comprenant un annuleur d'écho proche (10) recevant un signal D affecté des variations de phase de la porteuse de transmission et un annuleur d'écho lointain (12) recevant ledit signal D affecté de plus d'un retard substantiellement égal au retard mesuré $\tau$ de l'écho lointain, ce procédé destiné à l'initialisation des coefficients de filtre des annuleurs d'échos proche et lointain étant caractérisé en ce qu'il comporte au moins les opérations suivantes :

a) l'application à la voie émission d'un signal d'apprentissage formé d'au moins deux séquences d'apprentissage successives ($A_1$), ($A_2$) comprenant chacune une paire de séquences complémentaires S et C de même durée d, ayant des fonctions d'autocorrélation apériodiques dont les lobes principaux ont le même signe et les lobes latéraux ont sensiblement la même valeur absolue et des signes contraires, chaque séquence S et C étant suivie d'un intervalle de temps de durée variable $\Delta$, déterminée en fonction du retard mesuré $\tau$ de façon que l'écho lointain engendré par une séquence S ou C de chaque séquence d'apprentissage ($A_1$) apparaisse dans un intervalle de temps déterminé ($\ell$) d'une séquence d'apprentissage suivante ($A_2$), immédiatement après l'intervalle de temps (p) d'apparition de l'écho proche engendré par la séquence S ou C de ladite séquence d'apprentissage suivante ($A_2$) ;

b) pendant la durée de chaque séquence d'apprentissage ($A_2$, $A_3$) émise à la suite de la première séquence ($A_1$),

le calcul des signaux de corrélation ($E_s$) et ($E_c$) entre un signal déduit du signal reçu et échantillonné à ladite fréquence d'échantillonnage et des signaux de référence constitués respectivement, pendant la durée d'une séquence S et la durée $\Delta$ suivante par la valeur conjuguée dudit signal D appliqué aux annuleurs d'écho pendant une séquence S et, pendant la durée d'une séquence C et la durée $\Delta$ suivante, par la valeur conjuguée dudit signal D appliqué aux annuleurs d'écho pendant une séquence C,

l'application d'un retard $d + \Delta$ au signal de corrélation ($E_s$) formé pendant la durée d'une séquence S et la durée $\Delta$ suivante,

l'élaboration d'un signal de somme dudit signal de corrélation ($E_s$) retardé et du signal de corrélation ($E_c$) formé pendant la durée d'une séquence C et la durée $\Delta$ suivante,

c) l'aiguillage dudit signal de somme vers l'annuleur d'écho proche (10), puis vers l'annuleur d'écho lointain (12), durant deux intervalles de temps consécutifs (p") et ($\ell$") suivant une séquence C et pendant lesquels ce signal de somme constitue sous forme série les coefficients de l'annuleur d'écho proche et les coefficients de l'annuleur d'écho lointain.

2. Procédé selon la revendication 1, caractérisé en ce qu'il est émis un nombre de séquences d'apprentissage suffisant pour qu'il soit calculé pendant la durée d'au moins deux séquences d'apprentissage émises, les signaux de somme des signaux de corrélation ($E_s$) et ($E_c$) et en ce que ces signaux de somme considérés pendant la durée d'une séquence d'apprentissage sont accumulés pour former le signal de somme qui est aiguillé vers l'annuleur d'écho proche, puis vers l'annuleur d'écho lointain et constituent les coefficients de ces annuleurs d'écho.

3. Procédé selon la revendication 1, caractérisé en ce que les intervalles de temps $\Delta$ des séquences d'apprentissage émises comportent des signaux de remplissage tels que dans deux séquences d'apprentissage consécutives on utilise les signaux de remplissage A et $\bar{A}$ pour les intervalles de temps $\Delta$ suivant les deux séquences S et les signaux de remplissage B et $\bar{B}$ pour les intervalles de temps $\Delta$ suivant les deux séquences C, ces signaux de remplissage étant tels que $A + \bar{A} = 0$ et $B + \bar{B} = 0$, en ce qu'il est émis un nombre de séquences d'apprentissage suffisant pour qu'il soit calculé pendant la durée d'un nombre pair de séquences d'apprentissage émises, les signaux de somme des signaux de corrélation ($E_s$), ($E_c$) et en ce que ces signaux de somme considérés pendant le double de la durée d'une séquence d'apprentissage sont accumulés pour former le signal de somme qui est aiguillé vers l'annuleur d'écho proche, puis vers l'annuleur d'écho lointain et constituent les coefficients de ces annuleurs d'écho.

4. Procédé selon l'une des revendications 1 à 3, caractérisé en ce que les signaux de corrélation ($E_s$) et ($E_c$) sont calculés à partir de la version complexe du signal reçu et les coefficients des annuleurs d'écho sont formés à l'aide d'un seul signal d'apprentissage auquel sont affectées les variations de phase de la porteuse de transmission.

5. Procédé selon l'une des revendications 1 à 3, caractérisé en ce que les signaux de corrélation ($E_s$) et ($E_c$) sont calculés directement à partir du signal reçu et les coefficients des annuleurs d'écho sont obtenus en formant les sommes des coefficients formés en utilisant un premier signal d'apprentissage auquel sont affectées les variations de phase de la porteuse de transmission et des coefficients formés en utilisant un deuxième signal d'apprentissage auquel sont affectées les variations de phase de la porteuse de transmission en quadrature.

6. Dispositif mettant en œuvre le procédé selon la revendication 1, caractérisé en ce qu'il comporte pour traiter le signal reçu :

— des moyens d'aiguillage (19) et de corrélation (25, 24) pour former sur un premier trajet, pendant la durée d'une séquence S et la durée $\Delta$ suivante, le signal de corrélation entre ledit signal déduit du signal reçu et la valeur conjuguée du signal appliqué aux annuleurs d'écho pendant une séquence S, et pour former sur un deuxième trajet, pendant la durée d'une séquence C et la durée $\Delta$ suivante, le signal de corrélation entre ledit signal déduit du signal reçu et la valeur conjuguée du signal appliqué aux

**0 116 387**

annuleurs d'écho pendant une séquence C,

— des moyens de retard variable en fonction de Δ (26) pour retarder de la durée d + Δ le signal dans le premier trajet,

— des moyens d'addition (27) pour former un signal de somme du signal de corrélation retardé du premier trajet et du signal de corrélation du deuxième trajet,

— enfin des moyens d'aiguillage (31, 32) pour diriger ledit signal de somme vers l'annuleur d'écho proche, puis l'annuleur d'écho lointain pendant deux intervalles de temps consécutifs suivant une séquence C.

7. Dispositif selon la revendication 6, mettant en œuvre le procédé selon l'une des revendications 2 et 3, caractérisé en ce qu'il comporte en outre des moyens d'accumulation (28) pour accumuler des signaux de somme formés pendant un certain nombre de séquences d'apprentissage, lesdits signaux de somme accumulés formant le signal de somme qui est dirigé vers l'annuleur d'écho proche, puis vers l'annuleur d'écho lointain.

**Claims**

1. A method used in an echo-cancelling arrangement incorporated in a transceiver equipment to cancel an echo signal occurring in the receive path (2) in response to a signal applied to the transmit path (1) and consisting of a substantially near undelayed echo and a delayed distant echo, said echo-cancelling arrangement operating at a given sample rate and comprising a near echo canceller (10) receiving a signal D subjected to the phase variations of the transmit carrier and a distant echo canceller (12) receiving the said signal D subjected additionally to a delay which is substantially equal to the measured distant echo delay τ, said method intended to initialize the filter coefficients of the near and distant echo cancellers being characterized in that it comprises at least the following steps :

a) application to the transmit path of a training signal consisting of at least two consecutive training sequences ($A_1$, $A_2$) each comprising a pair of complementary sequences S and C of a same duration d, having a periodic autocorrelation functions whose main lobes have the same sign and whose sidelobes have substantially the same absolute value and opposite sings, each S and C sequence being followed by a time interval of a variable duration Δ, determined as a function of the measured delay τ so that the istant echo produced in response to an S or C sequence in each training sequence ($A_1$) appears within a predetermined time interval (I) of a following training sequence ($A_2$), immediately after the time interval (p) for the apperance of the near echo produced in response to the S or C sequence of the said following training sequence ($A_2$) ;

b) during the duration of each training sequence ($A_2$, $A_3$) transmitted after the first sequence ($A_1$), calculation of correlation signals ($E_s$) and ($E_c$) between a signal derived from the received signal and sampled at the said sample rate and reference signals constituted respectively, during the duration of an S sequence and the following duration Δ, by the conjugate value of the said signal D applied to the echo cancelers during an S sequence and, during the duration of a C sequence and the following duration Δ, by the conjugate value of the said signal D applied to the echo cancellers during a C-sequence,

application of a delay d + Δ to the correlation signal ($E_s$) formed during the duration of an S sequence and the following duration Δ,

production of a signal of the said delayed correlation signal ($E_s$) and the correlation signal ($E_s$) formed during the duration of a C sequence and the following duration Δ,

c) routing of the said signal to the near echo canceller (10) and then to the distant echo canceller (12) during two consecutive time intervals (p″) and (I″) following a C sequence and during which this signal constitutes in series from the coefficients of the near echo canceller and the coefficients of the distant echo canceller.

2. A method as claimed in claim 1, characterized in that a sufficient number of training sequences is transmitted to enable the sum signals of the correlation signals ($E_s$) and ($E_c$) to be calculated during the duration of at least two transmitted training sequences, and that these sum signals considered during the duration of a training sequence are accumulated to form the sum signal which is routed to the near echo canceller and then to the distant echo canceller and constitutes the coefficients of these echo cancellers.

3. A method as claimed in claim 1, characterized in that the time intervals Δ in the transmitted training sequences comprise fill-in signals such that in two consecutive training sequences fill-signals A and $\bar{A}$ are used for the time intervals Δ following the two S sequences and fill-in signals B and $\bar{B}$ for the time intervals Δ following the two C sequences, these fill-in signals being such that $A + \bar{A} = 0$ and $B + \bar{B} = 0$, in that sufficient number of training sequences is transmitted to enable the sum signals of the correlations signals ($E_s$), ($E_c$) to be calculated during the duration of an even number of transmitted training sequences, and in that these sum signals considered during twice the duration of a training sequence are accumulated to form the sum which is routed to the near echo canceller and then to the distant echo canceller and constitutes the coefficients of these echo cancellers.

4. A method as claimed in any of claims 1 to 3, characterized in that the correlation ($E_s$) and ($E_c$) are calculated from the complex version of the received signal and the coefficients of the echo cancellers are formed with the aid of a single training signal to which the phase variations of the transmit carrier are applied.

10

5. A method as claimed in any of claims 1 to 3, characterized in that the correlation signals ($E_s$) and ($E_c$) are calculated directly from the received signal and the coefficients of the echo cancellers are obtained by summing the coefficients formed by using a first training signal to which the phase variations of the transmit carrier are applied and the coefficients formed by using a second training signal to which the phase variations of the transmit carrier are applied in quadrature.

6. An apparatus for carrying out the method claimed in claim 1, characterized in that said apparatus comprises for processing the received signal :

— routing (19) and correlating means (25, 24) for forming on a first path, during the duration of an S sequence and the following duration Δ, the correlation signal between the said signal derived from the received signal and the conjugate value of the signal applied to the echo cancellers during an S sequence, and for forming on a second path, during the duration of a C sequence and the following duration Δ, the correlation signal between the said signal derived from the received signal and the conjugate value of the signal applied to the echo cancellers during a C sequence,

— delay means (26) having a variable delay as a function of Δ to delay by a duration d + Δ the signal on the first path,

— adding means (27) to form a sum signal from the delayed correlation signal on the first path and the correlation signal on the second path,

— finally routing means (31, 32) to route the said sum signal to the near echo canceller and then to the distant echo canceller during two successive time intervals following a C sequence.

7. An apparatus as claimed in claim 6, for carrying out a method as claimed in any of claims 2 and 3, characterized in that it further comprises means (28) for accumulating sum signals formed during a given number of training sequences, the said accumulated sum signals forming the signal which is routed to the near echo canceller and then to the distant echo canceller.

## Patentansprüche

1. Verfahren, das in einer Echokompensationsanordnung angewandt wird, die in eine Sende-Empfangsanordnung (2) aufgenommen ist zum in der Empfangsstrecke (2) Kompensieren eines Echosignals, das von einem der Sendestrecke (1) zugeführten Signal erzeugt und durch ein nahezu nicht verzögertes Nahecho und ein verzögertes Fernecho gebildet wird, wobei diese Echokompensationsanordnung mit einer bestimmten Abtastfrequenz arbeitet und mit einem Nach-Echokompensator (10) versehen ist, der ein Signal D erhält, das Phasenverschiebungen des Übertragungsträgers ausgesetzt ist, sowie mit einem Fern-Echokompensator (12) versehen ist, der das genannte Signal D erhält mit ausserdem einer Verzögerung, die der gemessenen Verzögerung des Fernechos nahezu entspricht, wobei dieses Verfahren zur τ Anfangseinstellung der Filterkoeffizienten der Nah- und Fern-Echokompensatoren bestimmt ist, dadurch gekennzeichnet, dass dieses Verfahren wenigstens die folgenden Schritte aufweist :

a) das der Sendestrecke Zuführen eines Anlernsignals, das durch mindestens zwei aufeinanderfolgende Anlernreihen ($A_1$), ($A_2$) gebildet wird, mit je einem Paar komplementären Reihen S und G gleicher Dauer d, die aperiodische Autokorrelationsfunktionen aufweisen, deren Hauptkeulen dasslebe Vorzeichen und deren Seitenkeulen nahezu denselben Absolutwert und entgegensetzte Vorzeichen haben, wobei jeder Reihe S und C ein Zeitintervall einer veränderlichen Dauer Δ folgt, die derart als Funktion der gemessenen Verzögerung bestimmt wird, dass das Fernecho, das von einer Reihe S oder C jeder Anlernreihe ($A_1$) erzeugt wird, in einem bestimmten Zeitintervall ( I ) einer folgenden Anlernreihe ($A_2$) auftritt, unmittelbar nach dem Auftrittszeitintervall (p) des Nahechos, das von der Reihe S oder C der genannten folgenden Anlernreihe ($A_2$) erzeugt wird ;

b) während der Dauer jeder Anlernreihe ($A_2$, $A_3$), die nach der genannten ersten Reihe ($A_1$) ausgesendet wird,

das Berechnen der Korrelationssignale ($E_s$) und ($E_c$) zwischen einem Signal, das von dem empfangenen Signal hergeleitet und mit der genannten Abtastfrequenz abgetastet ist, und Bezugssignalen, die während der Dauer einer Reihe S und der nachfolgenden Dauer Δ durch den konjugierten Wert des genannten den Echokompensatoren während einer Reihe S zugeführten Signals D, bzw. während der Dauer einer Reihe C und der nachfolgenden Dauer Δ durch den konjugierten Wert des genannten den Echokompensatoren während einer Reihe C zugeführten Signals D gebildet werden ;

das Anwenden einer Verzögerung d + Δ auf das Korrelationssignal ($E_s$), das während der Dauer einer Reihe S und der nachfolgenden Dauer Δ gebildet wird ;

das Ermitteln eines Summensignals aus dem genannten verzögerten Korrelationssignal ($E_s$) und dem Korrelationssignal ($E_c$), das während der Dauer einer Reihe C und der nachfolgenden Dauer Δ gebildet wird,

c) das Leiten des genannten Summensignals zu dem Nah-Echokompensator (10) und danach zu dem Fern-Echokompensator (12) während zwei aufeinanderfolgender Zeitintervalle (p") und ( I"), die einer Reihe C folgen, wobei dieses Summensignal während der genannten zwei Zeitintervalle in Reihenform die Koeffizienten des Nah-Echokompensators und die Koeffizienten des Fern-Echokompensators darstellt.

11

2. Verfahren nach Anspruch 1, dadurch gekennzeichnet, dass eine ausreichende Anzahl Anlernreihen ausgesendet wird, damit während der Dauer mindestens zweier ausgesendeter Anlernreihen die Summensignale der Korrelationssignale $(E_s)$ und $(E_c)$ berechnet werden und dass diese betreffenden Summensignale während der Dauer einer Anlernreihe akkumuliert werden zum Bilden des dem Nah-Echokompensator und danach dem Fern-Echokompensator zugeleiteten, die Koeffizienten dieser Echokompensatoren darstellenden Summensignals.

3. Verfahren nach Anspruch 1, dadurch gekennzeichnet, dass die Zeitintervalle $\Delta$ der ausgesendeten Anlernreihen derartige Auffüllsignale aufweisen, dass in zwei aufeinanderfolgenden Anlernreihen die Auffüllsignale A und $\bar{A}$ für die den beiden Reihen S folgenden Zeitintervalle $\Delta$ und die Auffüllsignale B und $\bar{B}$ für die den beiden Reihen C folgenden Zeitintervalle $\Delta$ verwendet werden, wobei diese Auffüllsignale derart sind, dass $A + \bar{A} = 0$ und $B + \bar{B} = 0$, dass eine ausreichende Anzahl Anlernreihen ausgesendet wird, damit während der Dauer einer geraden Anzahl ausgesendeter Anlernreihen die Summensignale der Korrelationssignale $(E_s)$ und $(E_c)$ berechnet werden und dass diese betreffenden Summensignale während der doppelten Dauer einer Anlernreihe akkumuliert zum Bilden des dem Nah-Echokompensator und danach dem Fern-Echokompensator zugeleiteten, die Koeffizienten dieser Echokompensatoren Summensignals.

4. Verfahren nach einem der Ansprüche 1 bis 3, dadurch gekennzeichnet, dass die Korrelationssignale $(E_s)$ und $(E_c)$ auf Basis der komplexen Version des empfangenen Signals berechnet werden und die Koeffizienten der Echokompensatoren gebildet werden mit Hilfe eines einzigigen Anlernsignals, dem die Phasenänderungen des übertragungsträgers zugeordnet werden.

5. Verfahren nach einem der Ansprüche 1 bis 3, dadurch gekennzeichnet, dass die Korrelationssignale $(E_s)$ und $(E_c)$ unmittelbar auf Basis des empfangenen Signals berechnet werden und die Koeffizienten der Echokompensatoren erhalten werden durch Bildung der Summen aus derjenigen Koeffizienten, die unter Verwendung eines ersten Anlernsignals, dem die Phasenänderungen des übertragungsträgers zugeordnet sind, gebildet sind und aus derjenigen Koeffizienten, die unter Verwendung eines zweiten Anlernsignals, dem die Phasenänderungen des Quadraturübertragungsträgers zugeordnet sind, gebildet sind.

6. Vorrichtung zum Durchführen des Verfahrens nach Anspruch 1, dadurch gekennzeichnet, dass diese Vorrichtung zum Verarbeiten des empfangenen Signals mit den folgenden Elementen versehen ist :
— Zuleitungsmitteln (19) und Korrelationsmitteln (25, 24), damit während einer Reihe S und der nachfolgenden Zeitdauer $\Delta$ in einer ersten Strecke das Korrelationssignal zwischen dem genannten von dem empfangenen Signal hergeleiteten Signal und dem konjugierten Wert des den Echokompensatoren während einer Reihe S zugeführten Signals gebildet wird und damit während der Dauer einer Reihe C und der nachfolgenden Zeitdauer $\Delta$ in einer zweiten Strecke das Korrelationssignal zwischen dem genannten, von dem empfangenen Signal hergeleiteten Signal und dem konjugierten Wert des den Echokompensatoren während einer Reihe C zugeführten Signals gebildet wird,
— Verzögerungsmitteln (26) mit einer abhängig von $\Delta$ veränderlichen Verzögerung, zum mit der Zeitdauer $d + \Delta$ Verzögern des Signals in der ersten Strecke,
— Addiermitteln (27) zum Bilden des Summensignals des verzögerten Korrelationssignals der ersten Strecke und des Korrelationssignals der zweiten Strecke,
— zum Schluss Zuleitungsmitteln (31, 32) zum Zuleiten des genannten Summensignals zu dem Nah-Echokompensator und danach zu dem Fern-Echokompensator während zweier aufeinanderfolgender Zeitintervalle, die einer Reihe C folgen.

7. Vorrichtung nach Anspruch 6 zum Durchführen des Verfahrens nach einem der Ansprüche 2 und 3, dadurch gekennzeichnet, dass diese Vorrichtung ausserdem mit Akkumuliermitteln (28) zum Akkumulieren der Summensignale versehen ist, die während einer bestimmten Anzahl Anlernperioden gebildet sind, wobei die genannten akkumulierten Summensignale das dem Nah-Echokompensator und danach dem Fern-Echokompensator zugeführte Summensignal bilden.

FIG.1

FIG. 2